# EUROPEAN PATENT SPECIFICATION

(11) **EP 2 998 209 B1**
(45) Date of publication and mention of the grant of the patent: **20.03.2019**
(21) Application number: 15185255.5
(22) Date of filing: 15.09.2015
(51) Int. Cl.: B62K 5/027, B62K 5/05, B62K 5/10

(54) **FRONT TWO-WHEEL SADDLE-RIDE-TYPE SWING VEHICLE**
SCHAUKEL-SATTELFAHRZEUG MIT ZWEI LENKBAREN VORDERRÄDERN
VÉHICULE INCLINABLE À SELLE AVEC DEUX ROUES AVANT

(30) Priority: 22.09.2014 JP 2014192780
(43) Date of publication of application: 23.03.2016
(73) Proprietor: HONDA MOTOR CO., LTD., Tokyo, 107-8556 (JP)
(72) Inventor: Kawasaki, Yohei, Saitama, 351-0193 (JP); Kobayashi, Hiroyoshi, Saitama, 351-0193 (JP); Nose, Tsubasa, Saitama, 351-0193 (JP); Nagatani, Hirotaka, Saitama, 351-0193 (JP); Kudo, Takashi, Saitama, 351-0193 (JP)
(74) Representative: Beder, Jens

(56) References cited:
- EP-A1- 1 561 612
- FR-A1- 2 953 184
- JP-A- 2010 228 551

## Description

The present invention relates to a front two-wheel saddle-ride-type swing vehicle.

Conventionally, there has been known a front two-wheel saddle-ride-type swing vehicle in which a pair of left and right front wheels is supported on a front end portion of a vehicle body frame by parallel links (see JP-A-2010-228551, for example).

In JP-A-2010-228551, an upper arm and a lower arm which form a part of the parallel links respectively are supported on a head pipe of a vehicle body frame in a vertically spaced-apart manner respectively.

In this manner, in the saddle-ride-type vehicle provided with the parallel links on a front portion of the vehicle body, there exist drawbacks that the periphery of the head pipe becomes large-sized in order to support the link mechanism, and it is necessary to secure an arm swing space in order to avoid the upper arm and the lower arm when these arms swing.

A front two-wheel saddle-ride-type swing vehicle, in which all features of the preamble of claim 1 are disclosed, is described in FR-A-2953184.

It is an object of the invention to provide a front two-wheel saddle-ride-type swing vehicle in which an upper arm and a lower arm are supported on a head pipe, wherein large-sizing of the periphery of the head pipe can be suppressed, and support rigidity of the upper arm and the lower arm can be enhanced.

This object is achieved by a front two-wheel saddle-ride-type swing vehicle according to the enclosed independent claim 1. Advantageous features of the present invention are defined in the corresponding subclaims.

As the means of solving the above-mentioned drawbacks, the invention described in claim 1 is directed to a front two-wheel saddle-ride-type swing vehicle which includes: a head pipe which supports a handle bar; a main frame which is connected to the head pipe; an upper arm and a lower arm which have laterally inner portions thereof supported on the head pipe respectively and support left and right steering pipes corresponding to left and right front wheels on laterally outer portions thereof respectively, wherein an upper connecting portion and a lower connecting portion connected to the head pipe in a vertically separated manner from each other are provided at a connecting end portion of the main frame to the head pipe, the upper arm is supported on a portion of the head pipe above the upper connecting portion, and the lower arm is supported on the head pipe between the upper and lower connecting potions.

The invention called for in claim 2 is characterized in that the lower arm is supported closer to the lower connecting portion than an intermediate position between the upper and lower connecting portions.

The invention called for in claim 3 is characterized in that the main frame includes a rear joint portion which extends between the upper and lower connecting portions behind the lower arm, an opening which makes a swing shaft of the lower arm exposed to a rear side is formed in the rear joint portion.

The invention called for in claim 4 is characterized in that the lower arm is divided into first and second arm bodies.

The invention called for in claim 5 is characterized in that the lower arm is divided into left and right arm bodies, and the left and right arm bodies have the same shape.

According to the invention called for in claim 1, the lower arm is supported on the head pipe with high rigidity between the upper and lower connecting portions of the main frame spaced apart from each other, and the upper arm can be easily supported on the head pipe outside the space between the upper and lower connecting portions. Further, by arranging the upper arm outside the space between the upper and lower connecting portions, large-sizing of the connecting end potion of the main frame to the head pipe can be suppressed, and a swing space for the upper arm and the lower arm can be also easily secured thus providing the structure also suitable for a miniaturized vehicle such as a scooter.

According to the invention called for in claim 2, the lower arm can be arranged close to the front wheel and a distance between the lower arm and the upper arm can be secured thus increasing rigidity of a front wheel suspension device.

According to the invention called for in claim 3, rigidity of the connecting end portion of the main frame to the head pipe can be increased by joining the upper and lower connecting portions by means of the rear joint portion. Also when a bolt is used as a swing shaft for the lower arm, the bolt can be accessed from behind by a tool and hence, assembling property and maintenance property of the front wheel suspension device can be enhanced.

According to the invention called for in claim 4, by dividing the lower arm into left and right portions, front and rear portions or the like, the lower arm can be easily assembled into a closed space surrounded by the connecting end portion between the head pipe and the main frame.

According to the invention called for in claim 5, by dividing the lower arm into left and right portions, the lower arm can be easily assembled also into a closed space surrounded by the connecting end portion between the head pipe and the main frame. Further, the divided left and right arm bodies are made to have the same specification and hence, the increase in kinds of parts can be suppressed whereby a cost can be reduced.
Fig. 1 is a left side view of a saddle-ride-type vehicle according to an embodiment of the invention.
Fig. 2 is a front view of a front two-wheel suspension device of the saddle-ride-type vehicle.
Fig. 3 is a top plan view of the front two-wheel suspension device.
Fig. 4 is a cross-sectional view of the front two-wheel suspension device taken along an axis of a head pipe.
Fig. 5 is a view as viewed in the direction indicated by an arrow V in Fig. 4.
Fig. 6 is a cross-sectional view of the front two-wheel suspension device taken along a steering axis.
Fig. 7 is a view as viewed in the direction indicated by an arrow of the front two-wheel suspension device as viewed in a swing shaft direction.
Fig. 8 is a view as viewed in the direction indicated by an arrow corresponding to Fig. 7 of the front two-wheel suspension device when a vehicle body is swung to a left side.
Fig. 9 is a view as viewed in the direction indicated by an arrow corresponding to Fig. 7 of the front two-wheel suspension device when a vehicle body is swung to a right side.
Fig. 10 is a top plan view of an upper arm of the front two-wheel suspension device.
Fig. 11 is a top plan view of a lower arm of the front two-wheel suspension device.

Hereinafter, an embodiment of the invention is explained by reference to drawings. In the explanation made hereinafter, the directions such as "frontward direction", "rearward direction", "leftward direction", "rightward direction" and the like are equal to the directions of a vehicle explained hereinafter unless otherwise specified. In appropriate portions in the drawings used for the explanation made hereinafter, an arrow FR indicative of a front side of the vehicle, an arrow LH indicative of a left side of the vehicle, and an arrow UP indicative of an upper side of the vehicle are described.

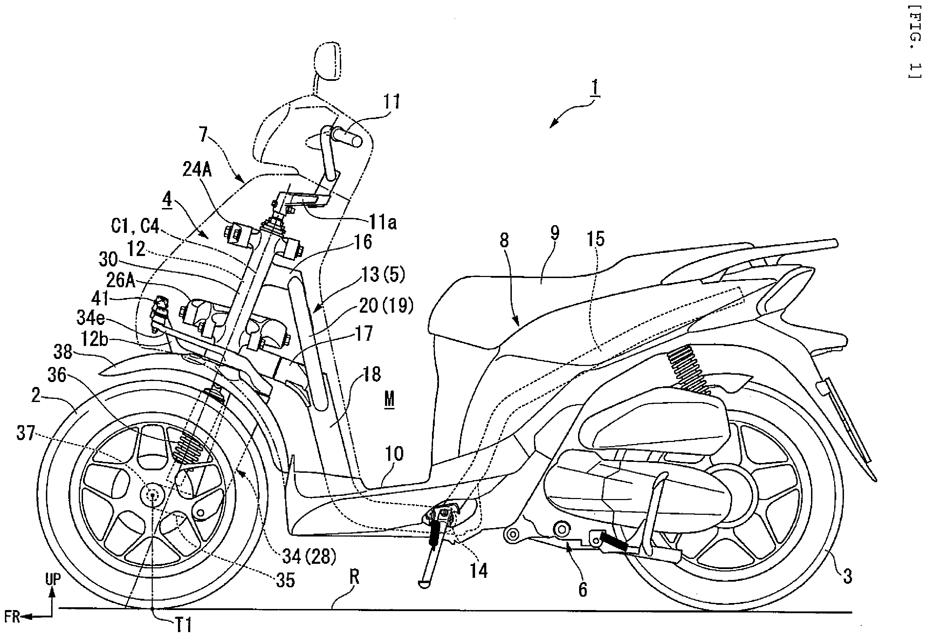

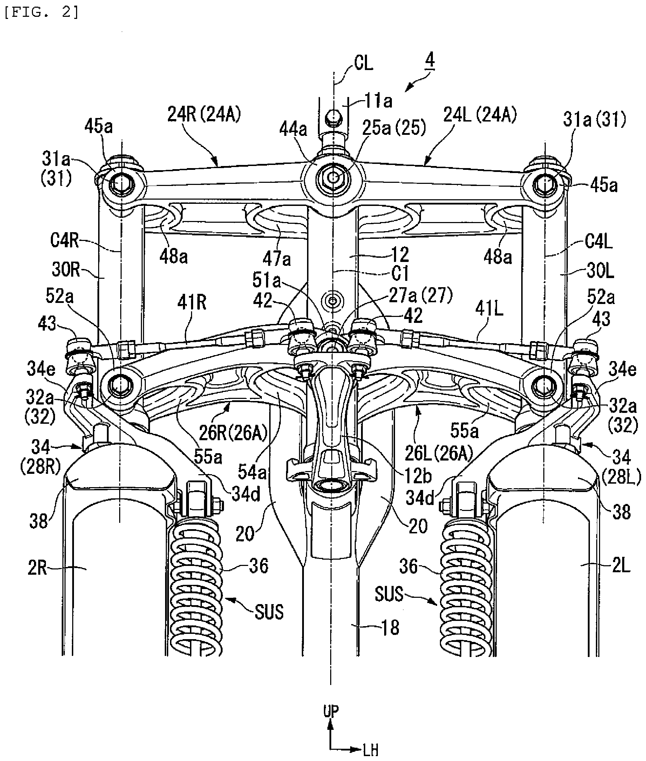

The saddle-ride-type vehicle 1 shown in Fig. 1 is a scooter type vehicle where a straddling space M is defined between a steering handle bar 11 and a seat 9 on which an occupant is seated, and a floor step 10 on which an occupant places his feet is arranged below the straddling space M. The saddle-ride-type vehicle 1 is a three-wheeled vehicle including a pair of left and right front wheels 2L, 2R (see Fig. 2) which is steered by the handle bar 11, and a single rear wheel 3 which is driven by a swing-type power unit 6, and is a front two-wheel swing vehicle which enables a vehicle body to be swingable (rolling movement) in the left-and-right direction.

The saddle-ride-type vehicle 1 has the left-and-right symmetrical constitution unless otherwise specified. In the explanation made hereinafter, unless otherwise specified, the explanation is made with respect to the constitution of the saddle-ride-type vehicle 1 in a state where the left and right front wheels 2L, 2R are in contact with a horizontal road surface R, the saddle-ride-type vehicle 1 is in a 1G state where a load corresponding to a weight of the vehicle is applied to a front two-wheel suspension device 4, the vehicle body is in an upright state with a swing angle of the vehicle body in the left-and-right direction set to 0 degree, and the vehicle is in a straight-advancing steering state where a steering angle of the left and right front wheels 2L, 2R is set to 0°. In this embodiment, there may be a case where left and right constitutional parts which form a pair are distinguished from each other by adding symbol "L" to the left part and by adding symbol "R" to the right part. In the drawing, there may be a case where symbols "L", "R" are omitted.

A vehicle body frame 5 of the saddle-ride-type vehicle 1 is formed by joining plural kinds of steel members into an integral body by welding or the like, for example. The vehicle body frame 5 includes: a head pipe 12 which supports the handle bar 11 in a rotatable manner on an upper side of a front portion of the vehicle body; a main frame 13 which extends downwardly from a rear side of the head pipe 12, is bent in the rearward direction, and extends rearwardly; a lower cross frame 14 which extends in the left-and-right direction below the vehicle body and has a center portion in the left-and-right direction to which a rear end of a lower portion of the main frame is connected; and left and right rear frames 15 which extend rearwardly and upwardly from both left and right sides of the lower cross frame 14. The periphery of the front portion of the vehicle body is covered by a front vehicle body cover 7, and the periphery of a rear portion of the vehicle body is covered by a rear vehicle body cover 8.

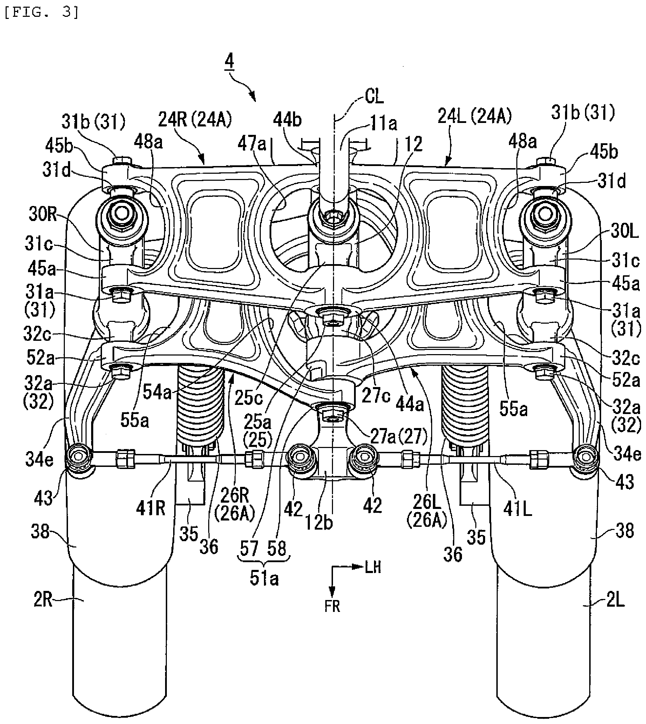

Also by reference to Fig. 2 and Fig. 3, the head pipe 12 is positioned at the center of the vehicle body in the left-and-right direction and has a center axis (head pipe axis) C1 thereof inclined with respect to the vertical direction such that the head pipe 12 is positioned on more on the rear side as the head pipe 12 extends upwardly.

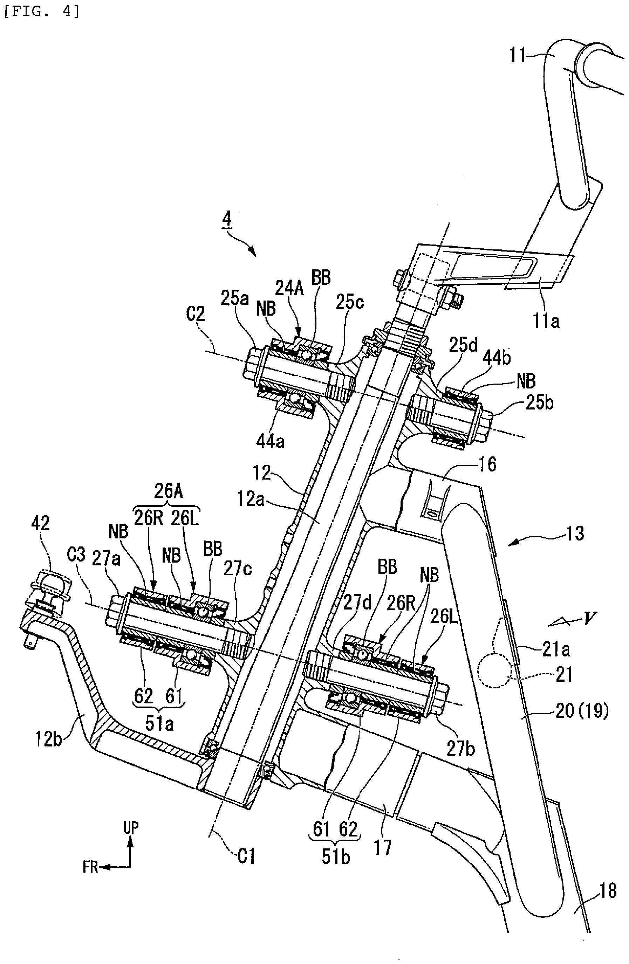

By reference to Fig. 4, the main frame 13 includes: an upper connecting portion 16 which extends rearwardly from an upper portion of the head pipe 12; a lower connecting portion 17 which extends rearwardly from a lower end portion of the head pipe 12; a main pipe 18 which has an upper end portion thereof connected to a rear end portion of the lower connecting portion 17 and extends downwardly from the upper end portion, is bent in the rearward direction, and extends rearwardly; and a rear joint portion 19 which extends between a rear end portion of the upper connecting portion 16 and the upper end portion of the main pipe 18 (or the rear end portion of the lower connecting portion 17).

The upper connecting portion 16 is integrally formed with the head pipe 12 by casting or the like, for example. However, the upper connecting portion 16 may be formed by joining a different member to the head pipe 12 by welding or the like. The lower connecting portion 17 is divided into a front portion which is integrally formed with the head pipe 12 by casting or the like and a rear portion which is a different member jointed to the main pipe 18 by welding, for example. However, the lower connecting portion 17 may be integrally formed with the head pipe 12 as a whole or the lower connecting portion 17 may be formed of a different member as a whole.

The lower connecting portion 17 extends along the direction orthogonal to the head pipe axis C1 as viewed in a side view of the vehicle. The upper connecting portion 16 extends with the gentler inclination than the direction orthogonal to the head pipe axis C1 as viewed in a side view of the vehicle. The upper connecting portion 16 is shorter than the lower connecting portion 17, and the rear joint portion 19 which extends between the rear end portions of the upper and lower connecting portions 16, 17 is inclined such that the more the rear joint portion 19 extends upwardly with respect to the vertical direction as viewed in a side view of the vehicle, the more the rear joint portion 19 is positioned on a front side. The rear joint portion 19 extends so as to form a straight line with the front portion of the main pipe 18 as viewed in a side view of the vehicle.

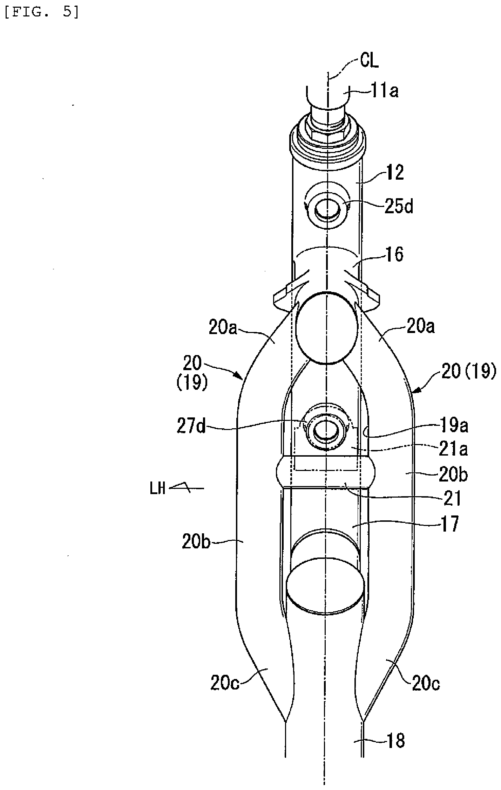

By reference also to Fig. 5, the rear joint portion 19 is formed of a pair of left and right rear joint pipes 20. The left and right rear joint pipe 20 has an upper inclined portion 20a which extends downwardly from the rear end portion of the upper connecting portion 16 and extends in a laterally outwardly inclined manner, a parallel portion 20b which extends downwardly from a lower end of the upper inclined portion 20a parallel to a side surface of the vehicle, and a lower inclined portion 20c which extends downwardly from a lower end of the parallel portion 20b in a laterally inwardly inclined manner. Between the left and right rear joint pipes 20, an opening 19a is formed through which a rear lower swing shaft 27b described later can be accessed by a tool from behind the rear joint portion 19. A cross pipe 21 which extends in the left-and-right direction extends between vertically intermediate portions of the left and right parallel portions 20b. A bracket 21a on which the front vehicle body cover 7 and the like are mounted is fixedly mounted on the cross pipe 21.

By reference to Fig. 4, a steering shaft 12a is coaxially and rotatably inserted in and supported by the head pipe 12. On an upper end portion of the steering shaft 12a which projects upwardly from the head pipe 12, the handle bar 11 is mounted in a rearwardly offset manner by way of a post 11a. A proximal end portion of an Ackerman arm 12b is fixed to a lower end portion of the steering shaft 12a which projects downwardly from the head pipe 12.

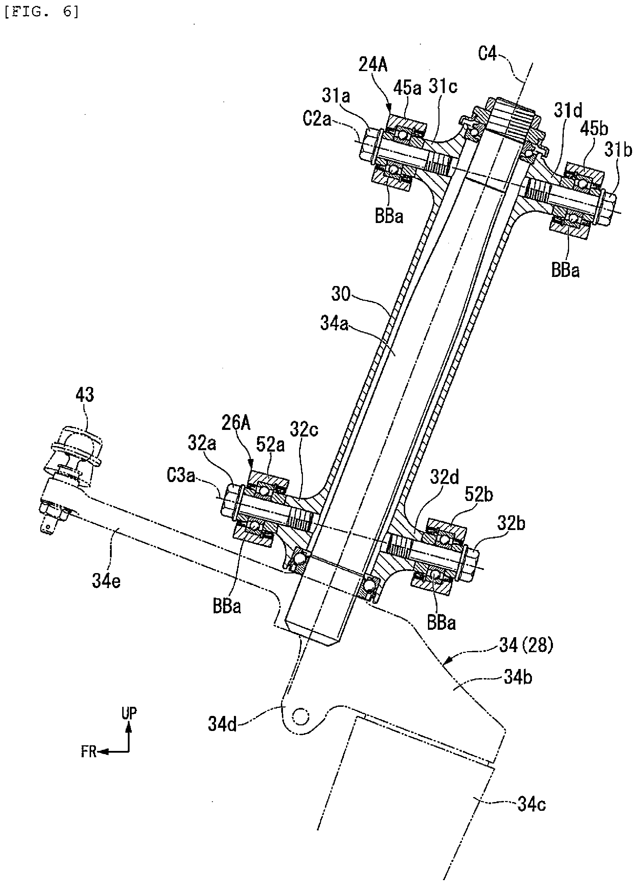

By reference to Fig. 2 to Fig. 4 and Fig. 6, an upper arm 24A and a lower arm 26A which extend in the left-and-right direction in the front two-wheel suspension device 4 are supported on the head pipe 12 in a swingable manner.

A laterally center portion of the upper arm 24A is supported on the upper end portion of the head pipe 12 by way of an upper swing shaft 25 which extends frontwardly and upwardly. Upper end portions of left and right steering pipes 30L, 30R are supported on the left and right outer portions of the upper arm 24A respectively by way of upper outer swing shafts 31 which extend parallel to the upper swing shaft 25.

The left and right steering pipes 30L, 30R respectively support left and right front fork units 28L, 28R corresponding to the left and right front wheels 2L, 2R in a steerable manner. The left and right steering pipes 30L, 30R are inclined such that the left and right steering pipes 30L, 30R extend parallel to the head pipe 12 as viewed in a side view of the vehicle. At least some portions of the left and right steering pipes 30L, 30R (the whole left and right steering pipes 30L, 30R in this embodiment) overlap with the head pipe 12 as viewed in a side view of the vehicle (see Fig. 1).

A laterally center portion of the lower arm 26A is supported on a lower portion of the head pipe 12 by way of a lower swing shaft 27 which extends frontwardly and upwardly. Lower end portions of the left and right steering pipes 30L, 30R are supported on the left and right outer portions of the lower arm 26A respectively by way of lower outer swing shafts 32 which extend parallel to the lower swing shaft 27. The upper and lower swing shafts 25, 27 extend parallel to each other, and are arranged parallel to the upper connecting portion 16, for example. The lower swing shaft 27 is arranged below a vertically intermediate position (close to the lower connecting portion 17) between the upper and lower connecting portions 16, 17.

In laterally center portions of the upper arm 24A and the lower arm 26A, center openings 47a, 54a into which the head pipe 12 is inserted are formed respectively.

On the left and right outer portions of the upper arm 24A and on the left and right outer portions of the lower arm 26A, outer recessed portions 48a, 55a into which the left and right steering pipes 30L, 30R are inserted are formed respectively.

As viewed from a front side of the vehicle, the head pipe axis C1 and respective center axes C2, C3 of the upper and lower swing shafts 25, 27 are arranged on a center line CL in the left-and-right direction of the vehicle body. As viewed from a front side of the vehicle, respective center axes (steering axes) C4 of the left and right steering pipes 30L, 30R and respective center axes C2a, C3a of the upper and lower outer swing shafts 31, 32 are arranged on vertical lines which are offset leftward and rightward equidistantly from the center line CL in the left-and-right direction of the vehicle body. As viewed from a front side of the vehicle, for example, respective ground contact points T1 of the left and right front wheels 2L, 2R (see Fig. 1) are positioned in the downwardly extending directions of the respective steering axes C4 as viewed.

The upper swing shaft 25 is divided into a front upper swing shaft 25a which is a shoulder bolt fastened to a front upper fastening boss 25c of the head pipe 12 from a front side of the head pipe 12, and a rear upper swing shaft 25b which is a shoulder bolt fastened to a rear upper fastening boss 25d of the head pipe 12 from behind the head pipe 12. The lower swing shaft 27 is divided into a front lower swing shaft 27a which is a shoulder bolt fastened to a front lower fastening boss 27c of the head pipe 12 from a front side of the head pipe 12, and a rear lower swing shaft 27b which is a shoulder bolt fastened to a rear lower fastening boss 27d of the head pipe 12 from behind the head pipe 12.

The upper outer swing shaft 31 is divided into a front upper outer swing shaft 31a which is a shoulder bolt fastened to a front upper outer fastening boss 31c of the left and right steering pipe 30L, 30R from a front side of the left and right steering pipe 30L, 30R, and a rear upper outer swing shaft 31b which is a shoulder bolt fastened to a rear upper outer fastening boss 31d of the left and right steering pipe 30L, 30R from behind the left and right steering pipe 30L, 30R. The lower outer swing shaft 32 is divided into a front lower outer swing shaft 32a which is a shoulder bolt fastened to a front lower outer fastening boss 32c of the left and right steering pipe 30L, 30R from a front side of the left and right steering pipe 30L, 30R, and a rear lower outer swing shaft 32b which is a shoulder bolt fastened to a rear lower outer fastening boss 32d of the left and right steering pipe 30L, 30R from behind the left and right steering pipe 30L, 30R.

Upper portions of the left and right front fork units 28L, 28R which respectively suspend the left and right front wheels 2L, 2R independently are supported on the left and right steering pipes 30L, 30R respectively.

The left and right front fork units 28L, 28R have left and right steering shafts 34a on upper portions thereof respectively. The left and right steering shafts 34a are supported in a steerable manner in a state where the left and right steering shafts 34a are inserted into the left and right steering pipes 30L, 30R respectively. The left and right front fork units 28L, 28R form a leading link type front suspension SUS such that the left and right front fork units 28L, 28R are arranged laterally adjacent to the laterally inside of the left and right front wheels 2L, 2R.

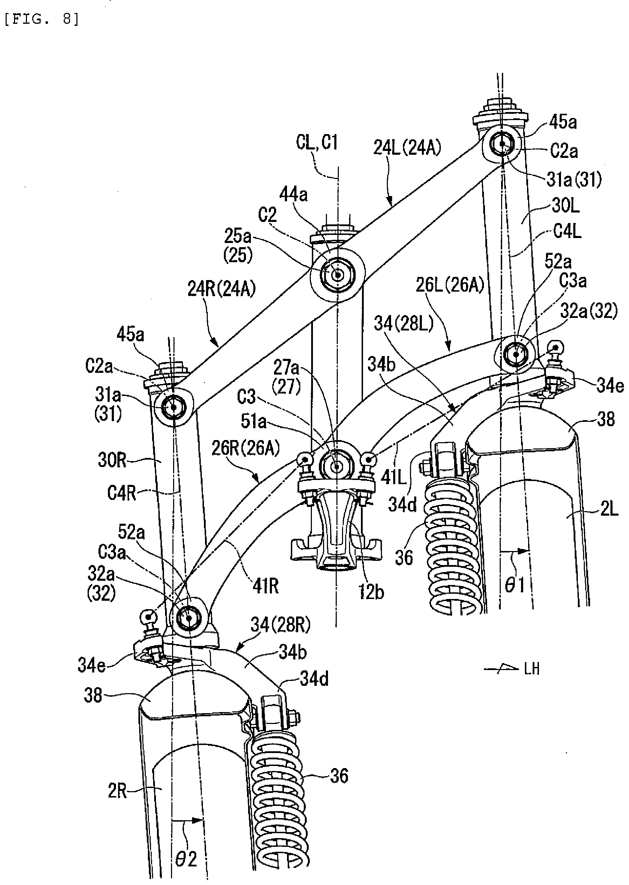

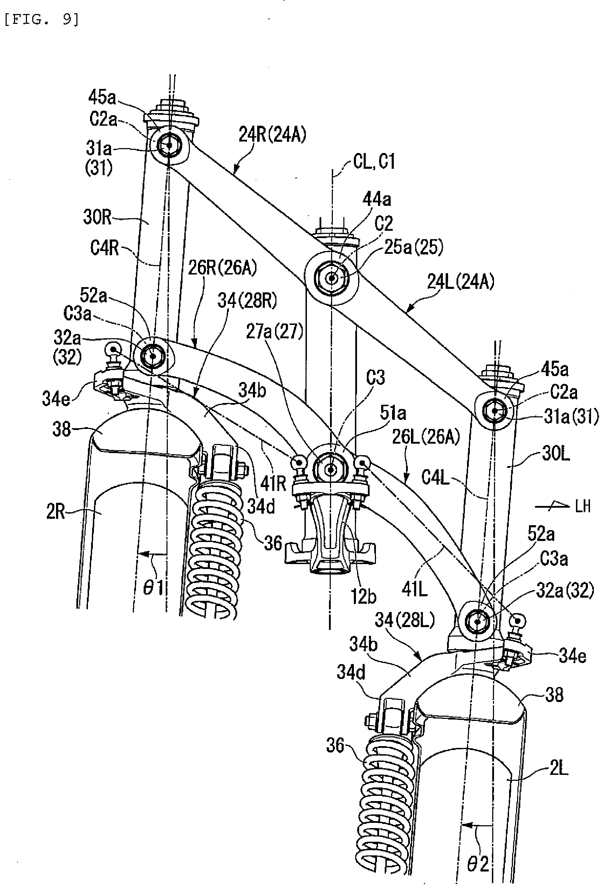

The front two-wheel suspension device 4 allows the vehicle body including the vehicle body frame 5, the power unit 6, the rear wheel 3 and the like to be swingable in the left-and-right direction while holding the left and right front wheels 2L, 2R in contact with the ground. The front two-wheel suspension device 4 also swings the left and right front fork units 28L, 28R and the left and right front wheels 2L, 2R in the left-and-right direction in accordance with the swinging of the vehicle body in the left-and-right direction. The front two-wheel suspension device 4 moves the left and right front fork units 28L, 28R and the left and right front wheels 2L, 2R alternately in the vertical direction with respect to the vehicle body (see Fig. 8 and Fig. 9).

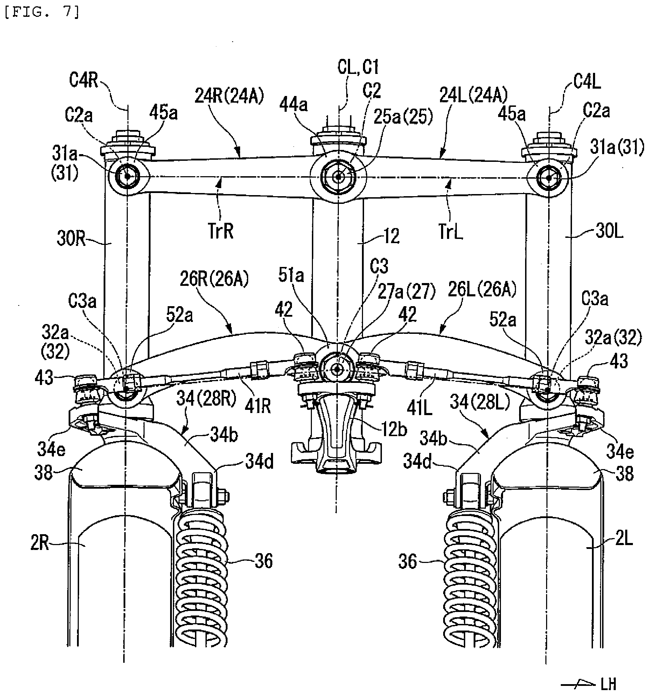

As shown in Fig. 7, the axis C2 of the upper swing shaft 25 and the respective axes C2a of the left and right upper outer swing shafts 31 are arranged on a straight line as viewed in the axis direction of the upper and lower swing shafts 25, 27, while the axis C3 of the lower swing shaft 27 and the respective axes C3a of the left and right lower outer swing shafts 32 are arranged in a shallow inverted V-shape.

The upper arm 24A, the lower arm 26A, and the left and right steering pipes 30L, 30R form a trapezoidal link mechanism also with the head pipe 12 on left and right sides of the vehicle body respectively.

To be more specific, as viewed in the above-mentioned axial direction, by connecting the respective axes C2, C3 of the upper and lower swing shafts 25, 27, the respective axes C2a of the left and right upper outer swing shafts 31, and the respective axes C3a of the left and right lower outer swing shafts 32 respectively on left and right sides of the vehicle body, trapezoidal shapes TrL, TrR are formed where an inner side and an outer side in the vehicle width direction form opposite sides parallel to each other, and out of these opposite sides, the outer side in the vehicle width direction is set longer than the inner side in the vehicle width direction.

Due to the above-mentioned trapezoidal link mechanisms, when the upper arm 24A and the lower arm 26A are swung, as shown in Fig. 8 and Fig. 9, the left and right steering pipes 30L, 30R, the left and right front fork units 28L, 28R, and the left and right front wheels 2L, 2R are inclined such that the lower side of these parts is positioned more outside in the left-and-right direction as these parts are moved upwardly, and the lower side of these parts is positioned more inside in the left-and-right direction as these parts are moved downwardly. That is, inclination angles of the left and right front wheels 2L, 2R are made to decrease with respect to a roll angle of the vehicle body.

By reference to Fig. 1 to Fig. 3, the left and right front fork units 28L, 28R respectively include: a knuckle member 34 having a left and right steering shaft 34a on an upper portion thereof; a leading arm 35 having a rear end portion which is supported on a lower end portion of the knuckle member 34 in a swingable manner; a cushion unit 36 extending between a front portion of the leading arm 35 and the knuckle member 34; and a front wheel axle 37 supported on a front end portion of the leading arm 35.

The knuckle member 34 includes: the steering shaft 34a; a lower bracket 34b which is fixedly mounted on a lower end portion of the steering shaft 34a and extends inwardly in the vehicle width direction and downwardly from the lower end portion; and a fork portion 34c which extends downwardly inside the left and right front wheels 2L, 2R in the left-and-right direction from a distal end portion of the lower bracket 34b. A rear end portion of the leading arm 35 is pivotally supported on a lower end portion of the fork portion 34c. A cushion upper support portion 34d which pivotally supports an upper end portion of the cushion unit 36 is formed on a front side of the distal end portion of the lower bracket 34b. A connecting arm 34e to which a laterally outer end of left and right tie rod 41L, 41R is connected extends frontwardly from the lower bracket 34b. A front fender 38 is mounted on a lower side of the lower bracket 34b.

The cushion unit 36 includes: a rod-type damper which is inclined such that the damper is positioned on more on the rear side as the damper extends upwardly as viewed in a side view of the vehicle; and a coil spring which is wound around the periphery of the damper. The cushion unit 36 extends and shrinks corresponding to the swinging of the leading arm 35 generated by the vertical movement of the front wheels 2L, 2R and hence, the cushion unit 36 absorbs an impact or the like inputted to the front wheels 2L, 2R and attenuates the vertical movement of the front wheels 2L, 2R.

As viewed in a side view of the vehicle, the respective steering axes C4 of the left and right steering shafts 34a are inclined such that the steering axes C4 are positioned on more on the rear side as the steering axes C4 extend upwardly with respect to the vertical direction. In other words, the respective steering axes C4 are inclined so as to become parallel to the head pipe axis C1 as viewed in a side view of the vehicle. An inclination angle of the steering axes C4 becomes a caster angle and generates a trail.

Respective tires of the left and right front wheels 2L, 2R and the rear wheel 3 have a tread surface having an arcuate cross section. The left and right front wheels 2L, 2R are inclined in the same manner as the vehicle body due to the operation of the front two-wheel suspension device 4 when the vehicle body is banked (at the time of rolling) so that ground contact points T1 on the tread surfaces are shifted to the side of the tread surface from the center of the tread surface. At this point of time, the left and right front wheels 2L, 2R generate a steering angle in the direction in which the left and right front wheels 2L, 2R are inclined due to an action of the trail.

A rear end portion of the Ackerman arm 12b is fixedly mounted on a lower end portion of the steering shaft 12a. Left and right inner ends of the left and right tie rods 41L, 41R are connected to a front end portion of the Ackerman arm 12b by way of left and right spherical surface bearings 42 respectively. Left and right outer ends of the left and right tie rods 41L, 41R are connected to front end portions of the connecting arms 34e of the left and right knuckle members 34 by way of left and right spherical surface bearings 43 respectively.

Due to such a constitution, the handle bar 11 and the left and right front wheels 2L, 2R are linked with each other. When the handle bar 11 is steered in the leftward or rightward direction, the left and right front wheels 2L, 2R are steered in either one of the leftward and rightward directions by way of the steering shaft 12a, the Ackerman arm 12b, the left and right tie rods 41L, 41R, and the left and right front fork units 28L, 28R. Left and right four joint link mechanisms including the Ackerman arm 12b, the left and right tie rods 41L, 41R, and the left and right connecting arms 34e exhibit substantially the same operation as the Ackerman mechanism. That is, when the left and right front wheels 2L, 2R are steered by the handle bar 11, out of the left and right front wheels 2L, 2R, a steering angle of the wheel on an inner wheel side becomes larger than a steering angle of the wheel on an outer wheel side.

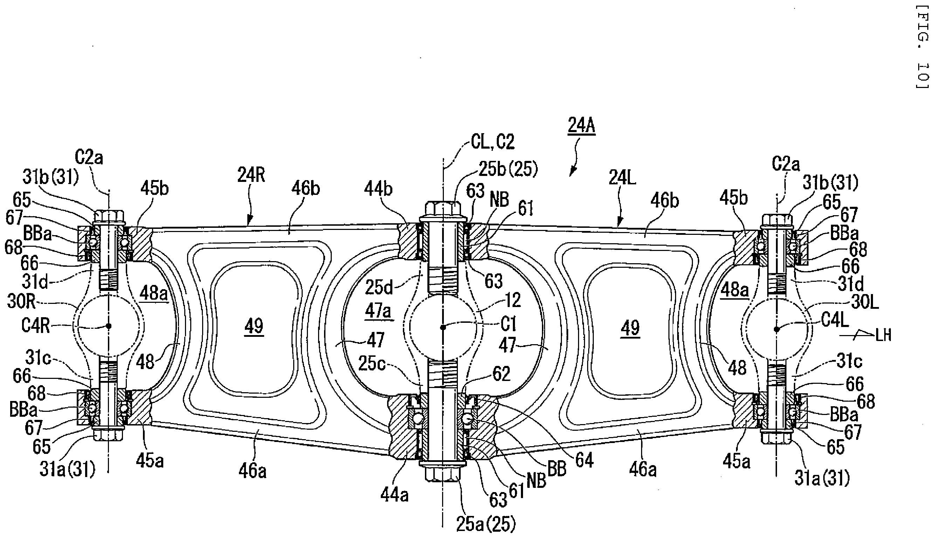

By reference to Fig. 7 and Fig. 10, the upper arm 24A is an integrally formed part including left and right upper arm bodies 24L, 24R.

The upper arm 24A includes: a front upper shaft support portion 44a through which the front upper swing shaft 25a passes; left and right front upper outer shaft support portions 45a through which the left and right front upper outer swing shafts 31 respectively pass; left and right front upper beam portions 46a which extend between the front upper shaft support portion 44a and the left and right front upper outer shaft support portions 45a; a rear upper shaft support portion 44b through which the rear upper swing shaft 25b passes; left and right rear upper outer shaft support portions 45b through which left and right rear upper outer swing shafts 31b respectively pass; left and right rear upper beam portions 46b which extend between the rear upper shaft support portion 44b and the left and right rear upper outer shaft support portions 45b; left and right inner connecting beam portions 47 which connect the front and rear upper beam portions 46a, 46b to each other while having a bent shape which projects laterally outwardly as viewed in a top plan view on the laterally outside of the head pipe 12; left and right outer connecting beam portions 48 which connect the front and rear upper beam portions 46a, 46b to each other while having a bent shape which projects laterally inwardly as viewed in a top plan view on the laterally inside of the left and right steering pipes 30L, 30R respectively; and left and right plate-shaped portions 49 which close areas surrounded by the front and rear upper beam portions 46a, 46b and the inner and outer connecting beam portions 47, 48 on left and right sides of the upper arm 24A.

A center opening 47a through which the head pipe 12 passes is formed between the left and right inner connecting beam portions 47 of the upper arm 24A. Outer recessed portions 48a through which the left and right steering pipes 30L, 30R pass are formed laterally on outer sides of the left and right outer connecting beam portions 48 of the upper arm 24A.

The left and right front upper beam portions 46a are arranged in a shallow V-shape which projects frontwardly as viewed in a top plan view, and the left and right rear upper beam portions 46b are arranged linearly as viewed in a top plan view.

The upper arm 24A is disposed such that the front and rear upper shaft support portions 44a, 44b and the left and right front and rear upper outer shaft support portions 45a, 45b are arranged horizontally as viewed in the axial direction of the upper swing shaft 25. That is, the axis C2 of the upper swing shaft 25 and the respective axes C2a of the left and right upper outer swing shafts 31 are arranged on a horizontal line as viewed in the axial direction of the upper swing shaft 25.

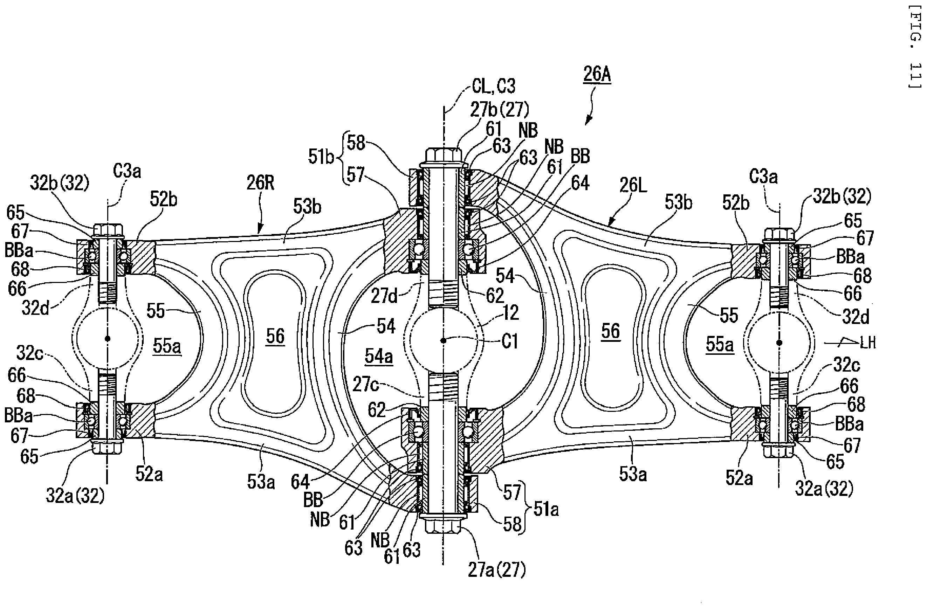

By reference to Fig. 7 and Fig. 11, the lower arm 26A is divided into left and right lower arm bodies (first and second arm bodies) 26L, 26R which form separate bodies from each other.

The lower arm 26A includes: a front lower shaft support portion 51a through which the front lower swing shaft 27a passes; left and right front lower outer shaft support portions 52a through which the left and right front lower outer swing shafts 32a respectively pass; left and right front lower beam portions 53a which extend between the front lower shaft support portion 51a and the left and right front lower outer shaft support portions 52a; a rear lower shaft support portion 51b through which the rear lower swing shaft 27b passes; left and right rear lower outer shaft support portions 52b through which the left and right rear lower outer swing shafts 32b respectively pass; left and right rear lower beam portions 53b which extend between the rear lower shaft support portion 51b and the left and right rear lower outer shaft support portions 52b; left and right inner connecting beam portions 54 which connect the front and rear lower beam portions 53a, 53b to each other while having a bent shape which projects laterally outwardly as viewed in a top plan view on the laterally outside of the head pipe 12; left and right outer connecting beam portions 55 which connect the front and rear lower beam portions 53a, 53b to each other while having a bent shape which projects laterally inwardly as viewed in a top plan view on the laterally inside of the left and right steering pipes 30L, 30R respectively; and left and right plate-shaped portions 56 which close areas surrounded by the front and rear lower beam portions 53a, 53b and the inner and outer connecting beam portions 54, 55 on left and right sides of the lower arm 26A.

A center opening 54a through which the head pipe 12 passes is formed between the left and right inner connecting beam portions 54 of the lower arm 26A. Outer recessed portions 55a through which the left and right steering pipes 30L, 30R pass are formed laterally on outer sides of the left and right outer connecting beam portions 55 of the lower arm 26A.

The lower arm 26A is disposed such that the front and rear lower shaft support portions 51a, 51b are arranged above the left and right front and rear lower outer shaft support portions 52a, 52b as viewed in the axial direction of the lower swing shaft 27. That is, the axis C3 of the lower swing shaft 27 and the respective axes C3a of the left and right lower outer swing shafts 32 are arranged in an upwardly projecting shallow V-shape as viewed in the axial direction of the lower swing shaft 27.

The left and right lower arm bodies 26L, 26R have a first shaft support portion 57 and a second shaft support portion 58 which are spaced apart from each other in the longitudinal direction with the head pipe 12 interposed therebetween on laterally inside thereof respectively. The first shaft support portion 57 is supported on the lower swing shaft 27 by way of a needle bearing NB and a ball bearing BB, and the second shaft support portion 58 is supported on the lower swing shaft 27 by way of a needle bearing NB without using a ball bearing BB.

In one of the left and right lower arm bodies 26L, 26R (the left lower arm body 26L in this embodiment), the first shaft support portion 57 is supported on a proximal end side (rear side) of the front lower swing shaft 27a, and the second shaft support portion 58 is supported on a distal end side (rear side) of the rear lower swing shaft 27b. In the other one of the left and right lower arm bodies 26L, 26R (the right lower arm body 26R in this embodiment), the second shaft support portion 58 is supported on a distal end side (front side) of the front lower swing shaft 27a, and the first shaft support portion 57 is supported on a proximal end side (front side) of the rear lower swing shaft 27b.

In one (left lower arm body 26L) of the left and right lower arm bodies 26L, 26R, the position of the front lower outer shaft support portion 52a and the position of the first shaft support portion 57 are made to overlap with each other in the axial direction of the lower swing shaft 27, and the second shaft support portion 58 is arranged behind the rear lower outer shaft support portion 52b. In the other one (right lower arm body 26R) of the left and right lower arm bodies 26L, 26R, the position of the rear lower outer shaft support portion 52b and the position of the first shaft support portion 57 are made to overlap with each other in the axial direction of the lower swing shaft 27, and the second shaft support portion 58 is arranged in front of the front lower outer shaft support portion 52a.

In this embodiment, the left and right lower arm bodies 26L, 26R are formed of the same arm body and are laterally arranged in an inverted manner. In one of the left and right lower arm bodies 26L, 26R (left lower arm body 26L), a laterally inner portion is offset rearwardly in the axial direction of the lower swing shaft 27 with respect to a laterally outer portion, and in the other one of the left and right lower arm bodies 26L, 26R (right lower arm body 26R), a laterally inner portion is offset rearwardly in the axial direction of the lower swing shaft 27 with respect to a laterally outer portion.

Due to such a constitution, in the left and right lower arm bodies 26L, 26R, the first shaft support portions 57 and the second shaft support portions 58 on the laterally inner side are arranged alternately in the axial direction of the lower swing shaft 27 while arranging the left and right steering pipes 30L, 30R which are supported on the laterally outside of the left and right lower arm bodies 26L, 26R respectively at the same position in the axial direction of the lower swing shaft 27. The first shaft support portions 57 and the second shaft support portions 58 are arranged coaxially on the axis C3 on front and rear sides of the head pipe 12. The first shaft support portions 57 and the second shaft support portions 58 arranged coaxially on front and rear sides of the head pipe 12 form the front and rear lower shaft support portions 51a, 51b of the lower arm 26A respectively.

By reference to Fig. 4 and Fig. 10, the upper arm 24A is arranged above the upper and lower connecting portions 16, 17 of the vehicle body frame 5, and the upper portion of the head pipe 12 is made to pass through the center opening 47a. Although the upper arm 24A is an integral part, by making the head pipe 12 pass through the center opening 47a from above the head pipe 12, the upper arm 24A is arranged at the position where the upper arm 24A is assembled to the head pipe 12.

By reference to Fig. 4 and Fig. 11, in the lower arm 26A, a lower portion of the head pipe 12 is made to pass through the center opening 54a between the upper and lower connecting portions 16, 17 of the vehicle body frame 5. The rear lower shaft support portion 51b of the lower arm 26A is arranged in a closed space between the upper and lower connecting portions 16, 17 as follows. That is, the lower arm 26A has the laterally split structure. Accordingly, by assembling the left and right lower arm bodies 26L, 26R such that the left and right lower arm bodies 26L, 26R sandwich the head pipe 12 from both left and right sides of the head pipe 12, the rear lower shaft support portion 51b is arranged in the closed space between the upper and lower connecting portions 16, 17. The lower arm 26A is arranged at a position where the lower arm 26A is assembled to the head pipe 12 in a state where the lower portion of the head pipe 12 passes through the center opening 54a.

Even when the lower arm 26A adopts the longitudinally split structure instead of the laterally split structure, the lower arm 26A may be arranged at the position where the lower arm 26A is assembled to the head pipe 12. However, when the front and rear lower shaft support portions 51a, 51b and the front and rear lower outer shaft support portions 52a, 52b are divided in the longitudinal direction, a technique for centering these portions with high accuracy becomes necessary. To the contrary, according to this embodiment where the lower arm 26A has the laterally split structure and the left and right lower arm bodies 26L, 26R are respectively formed of an integral body in the longitudinal direction are used, the centering of the front and rear lower shaft support portions 51a, 51b and the centering of the front and rear lower outer shaft support portions 52a, 52b can be performed easily so that the increase of a cost of the lower arm 26A can be suppressed.

The rear joint portion 19 which is positioned behind the rear lower shaft support portion 51 of the lower arm 26A is constituted of a pair of left and right rear joint pipes 20, and the opening 19a (see Fig. 5) through which the rear lower swing shaft 27b can be accessed from behind the rear joint portion 19 by a tool is formed between those left and right rear joint pipes 20 and hence, the operability at the time of mounting the rear lower swing shaft 27b on the head pipe 12 or removing the rear lower swing shaft 27b from the head pipe 12 is enhanced.

In the lower arm 26A, the first shaft support portions 57 which are supported on the proximal end side of the front and rear lower swing shafts 27a, 27b respectively have a larger width in the axial direction and a larger diameter than the second shaft support portions 58 which are supported on the distal end side of the front and rear lower swing shafts 27a, 27b have. In the inside of the first shaft support portions 57, the needle bearing NB which supports a radial load is arranged on a distal end side of the front and rear lower swing shafts 27a, 27b respectively, and the ball bearing BB which supports a composite load containing a radial load and a thrust load is arranged on a proximal end side of the front and rear lower swing shafts 27a, 27b respectively. The ball bearing BB is fixed to the first shaft support portion 57 in the axial direction by a stepped surface in the first shaft support portion 57, a circlip fitted in the first shaft support portion 57 or the like. A relatively large-sized first seal 63 is mounted in an opening of the first shaft support portion 57 on a ball bearing BB side, and a relatively small-sized second seal 64 is mounted in an opening of the first shaft support portion 57 on a needle bearing NB side.

In the second shaft support portions 58, only a needle bearing NB which supports a radial load is arranged. A first collar 61 is arranged on an inner periphery of each needle bearing NB. The second seal 64 is mounted in both openings of the second shaft support portion 58 respectively.

In the first shaft support portion 57, the first collar 61 is brought into contact with an inner race of the ball bearing BB which is arranged adjacent to a head pipe 12 side. The inner race is brought into contact with a second collar 62 which is arranged adjacent to a head pipe 12 side. The second collar 62 has a larger diameter, a larger thickness and a smaller width in the axial direction than the first collar 61 has. The second collar 62 is brought into contact with either one of the front and rear lower fastening bosses 27c, 27d of the head pipe 12. The first collar 61 in the second shaft support portion 58 is brought into contact with the first collar 61 in the first shaft support portion 57 on a side opposite to the head pipe 12. A seat surface of a bolt head of either of the front and rear lower swing shafts 27a, 27b is brought into contact with the first collar 61 in the second shaft support portion 58 on a side opposite to the head pipe 12.

By fastening the front and rear lower swing shafts 27a, 27b respectively in such a state, the first collars 61 in the second shaft support portions 58, the first collars 61 in the first shaft support portions 57, the inner races of the ball bearings BB, and the second collars 62 are fixed to the front and rear lower fastening bosses 27c, 27d of the head pipe 12, and the front and rear lower swing shafts 27a, 27b are supported on the front and rear lower fastening bosses 27c, 27d of the head pipe 12 in a cantilever manner. In such a fastening operation, the support of a proximal end side of the front and rear lower swing shafts 27a, 27b is performed such that the proximal end side of the front and rear lower swing shafts 27a, 27b is supported on the second collars 62 having a large diameter and a large thickness thus enhancing supporting rigidity of the front and rear lower swing shafts 27a, 27b.

In the first shaft support portion 57, a distal end side on which the needle bearing NB is mounted has a diameter smaller than a diameter of a proximal end side on which the ball bearing BB is mounted. The second shaft support portion 58 has a small diameter in the substantially same manner as the distal end side of the first shaft support portion 57. In the front and rear lower shaft support portions 51a, 51b of the lower arm 26A, the second shaft support portion 58 having a relatively small diameter and a distal end side of the first shaft support portion 57 are arranged on a distal end side in the axial direction, and a proximal end side of the first shaft support portion 57 having the relatively large diameter is arranged on a proximal end side in the axial direction. Due to such a constitution, the large-sizing of the constitution around the front and rear lower shaft support portions 51a, 51b of the lower arm 26A can be suppressed thus suppressing the influence exerted on the layout of peripheral parts.

The ball bearings BB also support a torsional load about the head pipe 12 and the like inputted from the left and right lower arm bodies 26L, 26R individually. Then, by arranging the ball bearing BB on proximal end sides of the front and rear lower swing shafts 27a, 27b respectively, a moment which acts on the front and rear lower swing shafts 27a, 27b due to inputting of a load applied to the front and rear lower swing shafts 27a, 27b from the ball bearings BB can be suppressed thus reducing a load to the front and rear lower swing shafts 27a, 27b which are supported in a cantilever manner.

By reference to Fig. 4 and Fig. 10, in the upper arm 24A, the front upper shaft support portion 44a substantially equal to the first shaft support portion 57 of the lower arm 26A is supported on the front upper swing shaft 25, and the rear upper shaft support portion 44b substantially equal to the second shaft support proton 58 of the lower arm 26A is supported on the rear upper swing shaft 25b. In the front upper shaft support portion 44a, a needle bearing NB is arranged on a distal end side of the front upper swing shaft 25a, and a ball bearing BB is arranged on a proximal end side of the front upper swing shaft 25a. In the rear upper shaft support portion 44b, only a needle bearing NB is arranged.

By fastening the front upper swing shaft 25a in the front upper shaft support portion 44a, a first collar 61, an inner race of the ball bearing BB, and a second collar 62 are fixed to the front upper fastening boss 25c of the head pipe 12, and the front upper swing shaft 25a is supported on the front upper fastening boss 25c of the head pipe 12 in a cantilever manner.

By fastening the rear upper swing shaft 25b in the rear upper shaft support portion 44b, the first collar 61 is fixed to the rear upper fastening boss 25d of the head pipe 12, and the rear upper swing shaft 25b is supported on the rear upper fastening boss 25d of the head pipe 12 in a cantilever manner.

On the front upper shaft support portion 44a of the upper arm 24A, a needle bearing NB having a relatively small diameter is arranged on a distal end side in the axial direction, and a needle bearing NB having a relatively small diameter is arranged on the rear upper shaft support portion 44b of the upper arm 24A. Due to such a constitution, in the substantially same manner as the lower arm 26A, the large-sizing of the constitution around the front and rear upper shaft support portions 44a, 44b can be suppressed. At the same time, the ball bearing BB is arranged on the proximal end side of the front upper swing shaft 25a and hence, a load applied to the front upper swing shaft 25a which is supported in a cantilever manner can be suppressed.

By reference to Fig. 4 and Fig. 11, in the front and rear lower outer shaft support portions 52a, 52b of the lower arm 26A, a ball bearing BBa which supports a composite load containing a radial load and a thrust load is arranged respectively. The ball bearing BBa is fixed to the front and rear lower outer shaft support portions 52a, 52b in the axial direction by a stepped surface formed in the front and rear lower outer shaft support portions 52a, 52b respectively, circlips fitted in the front and rear lower outer shaft support portions 52a, 52b respectively or the like. A third seal 67 having a relatively large diameter is mounted in openings of the front and rear lower outer shaft support portions 52a, 52b on steering pipes 30L, 30R sides respectively, and a fourth seal 68 having a relatively small diameter is mounted in openings of the front and rear lower outer shaft support portions 52a, 52b on sides opposite to the steering pipes 30L, 30R sides respectively.

In the front and rear lower outer shaft support portions 52a, 52b, a third collar 65 having a relatively large diameter and a large thickness is arranged adjacent to an inner race of the ball bearing BBa on a left and right steering pipe 30L, 30R side, and a fourth collar 66 having a relatively small diameter and a small thickness is arranged adjacent to the inner race of the ball bearing BBa on a side opposite to the left and right steering pipe 30L, 30R side. A seat surface of a bolt head of either of the front and rear lower outer swing shafts 32a, 32b is brought into contact with the fourth collar 66 on the side opposite to the left and right steering pipe 30L, 30R side.

By fastening the front and rear lower outer swing shafts 32a, 32b respectively in such a state, the fourth collars 66, the inner races of the ball bearings BBa, and the third collars 65 are fixed to the front and rear lower outer fastening bosses 32c, 32d of the steering pipes 30L, 30R, and the front and rear lower outer swing shafts 32a, 32b are supported on the front and rear lower outer fastening bosses 32c, 32d of the left and right steering pipes 30L, 30R in a cantilever manner. In such a fastening operation, the proximal end side of the front and rear lower outer swing shafts 32a, 32b are supported on the third collars 65 having a large diameter and a large thickness thus enhancing supporting rigidity of the front and rear lower outer swing shafts 32a, 32b.

By reference to Fig. 4 and Fig. 10, in the same manner as described above, a ball bearing BBa is fixedly arranged also in the inside of the front and rear upper outer shaft support portions 45a, 45b of the upper arm 24A. A third seal 67 and a fourth seal 68 are mounted in both openings of the front and rear upper outer shaft support portions 45a, 45b respectively. Further, the front and rear upper outer swing shafts 31a, 31b are supported on the front and rear upper outer fastening bosses 31c, 31d of the left and right steering pipes 30L, 30R in a cantilever manner respectively.

By reference to Fig. 7, the lower arm 26A is arranged in an upwardly projecting shallow V-shape by arranging the front and rear lower shaft support portions 51a, 51b above the left and right front and rear lower outer shaft support portions 52a, 52b respectively as viewed in the axial direction of the lower swing shaft 27. Accordingly, as described previously, as viewed in the axial direction of the upper and lower swing shafts 25, 27,the upper arm 24A, the lower arm 26A, and the left and right steering pipes 30L, 30R form the trapezoidal link mechanism also with the head pipe 12 on left and right sides of the vehicle body.

When the upper arm 24A and the lower arm 26A are swung due to the above-mentioned trapezoidal link mechanisms, the left and right steering pipes 30L, 30R, the left and right front fork units 28L, 28R, and the left and right front wheels 2L, 2R are inclined such that the lower side of these parts is positioned more outside in the left-and-right direction as these parts are moved upwardly, and the lower side of these parts is positioned more inside in the left-and-right direction as these parts are moved downwardly.

Further, the left and right steering pipes 30L, 30R, the left and right front fork units 28L, 28R, and the left and right front wheels 2L, 2R are made to have inclination angles which slightly differ from each other between left and right sides. The difference in inclination angle is allowed by adopting the constitution where the lower arm 26A has the split structure formed of the left and right lower arm bodies 26L, 26R and the left and right lower arm bodies 26L, 26R are bent about the lower swing shaft 27.

As shown in Fig. 7, the left and right steering pipes 30L, 30R extend vertically and are arranged parallel to each other as viewed in the axial direction of the upper and lower swing shafts 25, 27, and the position of the upper outer swing shaft 31 and the position of the lower outer swing shaft 32 in the left-and-right direction are set equal to each other. The upper arm 24A which extends between the left and right upper outer swing shafts 31 is arranged linearly, and the lower arm 26A which extends between the left and right lower outer swing shafts 32 is arranged in an inverted V-shape. Accordingly, an arm length of the lower arm 26A is set larger than an arm length of the upper arm 24A.

By reference to Fig. 8 and Fig. 9, when the vehicle body is swung about the upper swing shaft 25, the left and right steering pipes 30L, 30R and the front wheels 2L, 2R are swung in the same direction. In such a swinging operation, because of the difference in arm length between the upper arm 24A and the lower arm 26A, out of the left and right front wheels 2L, 2R, an inclination angle θ1 on an inner wheel side becomes larger than an inclination angle θ2 on an outer wheel side. Further, the inclination angles of the left and right front wheels 2L, 2R with respect to the vertical direction become smaller than a roll angle of the vehicle body.

That is, by making the inclination angle on an inner wheel side having a smaller turning radius relatively large compared to the inclination angle on an outer wheel side while suppressing the inclination angles of the left and right front wheels 2L, 2R with respect to the roll angle of the vehicle body, in the substantially same manner as the Ackerman mechanism, the difference in steering angle between the inner and outer wheels is easily generated and hence, the turning performance can be enhanced. Further, the lower arm 26A has the split structure formed of the left and right lower arm bodies 26L, 26R and hence, an arm length in the left-and-right direction, a mounting angle of the left and right steering pipes 30L, 30R and the like can be easily adjusted.

As has been explained heretofore, the saddle-ride-type vehicle 1 according to the above-mentioned embodiment is a front two-wheel saddle-ride-type swing vehicle which includes: the head pipe 12 which supports the handle bar 11; the main frame 13 which is connected to the head pipe 12; the upper arm 24A and the lower arm 26A each of which has a laterally inner portion thereof supported on the head pipe 12 and supports the left and right steering pipes 30L, 30R corresponding to the left and right front wheels 2L, 2R on laterally outer portions thereof, wherein the upper connecting portion 16 and the lower connecting portion 17 connected to the head pipe 12 in a vertically separated manner from each other are provided at the connecting end portion of the main frame to the head pipe 12, the upper arm 24A is supported on a portion of the head pipe 12 above the upper connecting portion 16, and the lower arm 26A is supported on the head pipe 12 between the upper and lower connecting potions 16, 17.

Due to such a constitution, the lower arm 26A is supported on the head pipe 12 with high rigidity between the upper and lower connecting portions 16, 17 of the main frame 13 which are spaced apart from each other, and the upper arm 24A can be easily supported on the head pipe 12 outside the space between the upper and lower connecting portions 16, 17. Further, by arranging the upper arm 24A outside the space between the upper and lower connecting portions 16, 17, large-sizing of the connecting end potion of the main frame 13 to the head pipe 12 can be suppressed, and a swing space for the upper arm 24A and the lower arm 26A can be also easily secured thus providing the structure also suitable for a miniaturized vehicle such as a scooter.

Further, in the above-mentioned saddle-ride-type vehicle 1, the lower arm 26A is divided into the left and right lower arm bodies 26L, 26R. Accordingly, the lower arm 26A can be easily assembled also in the closed space surrounded by the head pipe 12 and the connecting end portions of the main frame 13.

Further, in the above-mentioned saddle-ride-type vehicle 1, the lower arm 26A is supported closer to the lower connecting portion 17 than the intermediate position between the upper and lower connecting portions 16, 17. Accordingly, the lower arm 26A can be arranged close to the front wheels 2L, 2R and a distance between the lower arm 26A and the upper arm 24A can be secured thus increasing rigidity of the front wheel suspension device 4.

Further, the above-mentioned saddle-ride-type vehicle 1 includes the rear joint portion 19 which extends between the upper and lower connecting portions 16, 17 behind the lower arm 26A, the opening 19a which exposes the rear lower swing shaft 27b of the lower arm 26A and the periphery of the rear lower fastening boss 27d to which the rear lower swing shaft 27b is fastened to a rear side is formed in the rear joint portion 19. Accordingly, rigidity of the connecting end portion of the main frame 13 to the head pipe 12 can be increased by joining the upper and lower connecting portions 16, 17 by the rear joint portion 19. Also when a bolt is used as the rear lower swing shaft 27b for the lower arm 26A, the bolt can be accessed from behind by a tool and hence, assembling property and maintenance property of the front wheel suspension device 4 can be enhanced.

The invention is not limited to the above-mentioned embodiment. In the above-mentioned embodiment, the invention is applied to a swing three-wheeled vehicle which includes the pair of left and right front wheels on the front portion of the vehicle body and includes one rear wheel on the rear portion of the vehicle body, for example. However, the invention may be applied to a swing four-wheeled vehicle which includes a pair of left and right front wheels on a front portion of a vehicle body, and also includes a pair of left and right rear wheels on a rear portion of the vehicle body.

In this embodiment, the explanation has been made with respect to the example where the lower arm has the laterally split structure, the lower arm may have the longitudinally split structure. However, by adopting the laterally split structure in the lower arm, front and rear shaft support portions are formed as an integral part and hence, the laterally split structure is more preferable. Further, in this embodiment, the explanation has been made with respect to the example where the left and right arm bodies of the lower arm are arranged in an upwardly projecting V-shape as viewed in the axial direction. However, the left and right arm bodies of the lower arm may be arranged in a downwardly projecting V-shape as viewed in the axial direction.

Further, the constitution according to the above-mentioned embodiment is one example of the invention.
1: saddle-ride-type vehicle (front two-wheel saddle-ride-type swing vehicle)
2L, 2R: front wheel
11: handle bar (handle)
12: head pipe
13: main frame
16: upper connecting portion
17: lower connecting portion
19: rear joint portion
24A: upper arm
26A: lower arm
26L, 26R: arm body
27b: rear lower swing shaft (swing shaft)
30L, 30R: steering pipe

## Claims

1. A front two-wheel saddle-ride-type swing vehicle comprising:
a head pipe (12) which supports a handle (11);
a main frame (13) which is connected to the head pipe (12); and
an upper arm (24A) and a lower arm (26A) which have laterally inner portions thereof supported on the head pipe (12) respectively and support left and right steering pipes (30L, 30R) corresponding to left and right front wheels (2L, 2R) on laterally outer portions thereof respectively, wherein
an upper connecting portion (16) and a lower connecting portion (17) connected to the head pipe (12) in a vertically separated manner from each other are provided at a connecting end portion of the main frame (13) to the head pipe (12), and
the lower arm (26A) is supported on the head pipe (12) between the upper and lower connecting portions (16, 17),
**characterized in that**
the upper arm (24A) is supported on a portion of the head pipe (12) above the upper connecting portion (16).

2. The front two-wheel saddle-ride-type swing vehicle according to claim 1, wherein
the lower arm (26A) is supported closer to the lower connecting portion (17) than an intermediate position between the upper and lower connecting portions (16, 17).

3. The front two-wheel saddle-ride-type swing vehicle according to claim 1 or 2, wherein
the main frame (13) includes a rear joint portion (19) which extends between the upper and lower connecting portions (16, 17) behind the lower arm (26A), and
an opening (19a) which makes a swing shaft (27b) of the lower arm (26A) exposed to a rear side is formed in the rear joint portion (19).

4. The front two-wheel saddle-ride-type swing vehicle according to any one of claims 1 to 3, wherein
the lower arm (26A) is divided into first and second arm bodies (26L, 26R).

5. The front two-wheel saddle-ride-type swing vehicle according to claim 4, wherein
the lower arm (26A) is divided into left and right arm bodies (26L, 26R), and the left and right arm bodies (26L, 26R) have the same shape.

## Patentansprüche

1. Schwenkendes Fahrzeug vom Sattelfahrtyp mit zwei Vorderrädern, umfassend:
ein Kopfrohr (12), das einen Lenker (11) trägt;
einen Hauptrahmen (13), der mit dem Kopfrohr (12) verbunden ist; und
einen oberen Lenker (24A) und einen unteren Lenker (26A), deren seitlich innere Abschnitte von dem Kopfrohr (12) gehalten werden und die ein linkes bzw. rechtes Steuerrohr (30L, 30R) entsprechend dem jeweiligen linken und rechten Vorderrad (2L, 2R) an seitlich äußeren Abschnitten davon halten, wobei
ein oberer Verbindungsabschnitt (16) und ein unterer Bindungsabschnitt (17), die mit dem Kopfrohr (12) in einer vertikal voneinander beabstandeten Weise verbunden sind, an einem Verbindungsendabschnitt des Hauptrahmens (13) mit dem Kopfrohr (12) vorgesehen sind, und
der untere Arm (26A) an dem Kopfrohr (12) zwischen dem oberen und dem unteren Verbindungsabschnitt (16, 17) gehalten wird,
**dadurch gekennzeichnet, dass**
der obere Arm (24A) an einem Abschnitt des Kopfrohrs (12) oberhalb des oberen Verbindungsabschnitts (16) gehalten wird.

2. Schwenkendes Fahrzeug vom Sattelfahrtyp mit 2 Vorderrädern gemäß Anspruch 1, wobei
der untere Arm (26 A) näher an dem unteren Verbindungsabschnitt (17) gehalten wird als eine mittlere Position zwischen dem oberen und unteren Verbindungsabschnitt (16, 17).

3. Schwenkendes Fahrzeug vom Sattelfahrtyp mit zwei Vorderrädern gemäß Anspruch 1 oder 2, wobei
der Hauptrahmen (13) einen hinteren Gelenkabschnitt (19) aufweist, der sich zwischen dem oberen und dem unteren Verbindungsabschnitt (16, 17) erstreckt, und
eine Öffnung (19a), die bewirkt, dass eine Schwingenwelle (27b) des unteren Arms (26A) zu einer Rückseite orientiert ist, in dem hinteren Gelenksabschnitt (19) gebildet ist.

4. Schwenkendes Fahrzeug vom Sattelfahrtyp mit zwei Vorderrädern gemäß irgendeinem der Ansprüche 1 bis 3, wobei
der untere Arm (26A) in einen ersten und einen zweiten Lenkerkörper (26L, 26R) unterteilt ist.

5. Schwenkendes Fahrzeug vom Sattelfahrtyp gemäß Anspruch 4, wobei
der untere Arm (26A) in einen linken und einen rechten Armkörper (26L, 26R unterteilt ist und der linke und der rechte Armkörper (26 L, 26 R) dieselbe Form haben.

## Revendications

1. Véhicule inclinable de type à selle avec deux roues avant, comprenant :
un tube de fourche (12) qui supporte un guidon (11) ;
un cadre principal (13) qui est raccordé au tube de fourche (12) ; et
un bras supérieur (24A) et un bras inférieur (26A) qui ont des portions latéralement internes de ceux-ci supportées sur le tube de fourche (12) respectivement et supportent des tubes de direction gauche et droit (30L, 30R) correspondant aux roues avant gauche et droite (2L, 2R) sur des portions latéralement externes de ceux-ci respectivement, dans lequel
une portion de raccordement supérieure (16) et une portion de raccordement inférieure (17) raccordées au tube de fourche (12) de manière séparée à la verticale l'une de l'autre sont prévues au niveau d'une portion d'extrémité de raccordement du cadre principal (13) à au tube de fourche (12), et
le bras inférieur (26A) est supporté sur le tube de fourche (12) entre les portions de raccordement supérieure et inférieure (16, 17),
**caractérisé en ce que**,
le bras supérieur (24A) est supporté sur une portion du tube de fourche (12) au-dessus de la portion de raccordement supérieure (16).

2. Véhicule oscillant de type à enfourcher avec deux roues avant selon la revendication 1, dans lequel
le bras inférieur (26A) est supporté plus près de la portion de raccordement inférieure (17) qu'une position intermédiaire entre les portions de raccordement supérieure et inférieure (16, 17).

3. Véhicule oscillant de type à enfourcher avec deux roues avant selon la revendication 1 ou 2, dans lequel
le cadre principal (13) comporte une portion d'assemblage arrière (19) qui s'étend entre les portions de raccordement supérieure et inférieure (16, 17) derrière le bras inférieur (26A), et
une ouverture (19a) qui rend un arbre inclinable (27b) du bras inférieur (26A) exposé à un côté arrière est formée dans la portion d'assemblage arrière (19).

4. Véhicule oscillant de type à enfourcher avec deux roues avant selon l'une quelconque des revendications 1 à 3, dans lequel
le bras inférieur (26A) est divisé en premier et deuxième corps de bras (26L, 26R).

5. Véhicule oscillant de type à enfourcher avec deux roues avant selon la revendication 4, dans lequel
le bras inférieur (26A) est divisé en corps de bras gauche et droit (26L, 26R), et les corps de bras gauche et droit (26L, 26R) ont la même forme.
